(19) Europäisches Patentamt
European Patent Office
Office européen des brevets

(11) Veröffentlichungsnummer: **0 064 670**
**A1**

(12) # EUROPÄISCHE PATENTANMELDUNG

(21) Anmeldenummer: **82103619.1**

(22) Anmeldetag: **28.04.82**

(51) Int. Cl.³: **A 01 N 57/22**
//(A01N57/22, 53/00, 37/38)

(30) Priorität: **02.05.81 DE 3117435**

(43) Veröffentlichungstag der Anmeldung:
**17.11.82 Patentblatt 82/46**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Knauf, Werner, Dr.**
**Im Kirschgarten 24**
**D-6239 Eppstein/Taunus(DE)**

(72) Erfinder: **Salbeck, Gerhard, Dr.**
**Frankfurter Strasse 34**
**D-6238 Hofheim am Taunus(DE)**

(72) Erfinder: **Waltersdorfer, Anna, Dr.**
**Rauenthaler Weg 28**
**D-6000 Frankfurt am Main 71(DE)**

(54) **Schädlingsbekämpfungsmittel.**

(57) Schädlingsbekämpfungsmittel enthaltend eine Kombination aus einer Verbindung der Formel I,

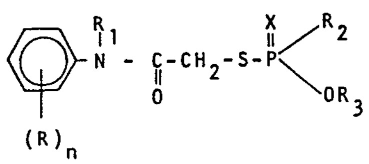

(1)

worin

R gleiche oder verschiedene Reste aus der Gruppe Halogen, ($C_1$-$C_3$)-Alkyl, $NO_2$, $OCH_3$,

$R_1$, $R_2$ und $R_3$ ($C_1$-$C_3$)-Alkyl,

X O, S und

n eine ganze Zahl von 1 - 3

bedeuten, und einer Verbindung der Formel II,

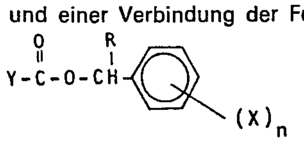

(11)

worin

Y eine gegebenenfalls substituierte Aralkyl-, Cyclopropyl- oder Arylamino-Gruppe,

R Wasserstoff, Cyano oder Ethinyl,

X Halogen oder Aryloxy, das gegebenenfalls durch Halogen substituiert ist, und

n eine ganze Zahl von 1 - 5

bedeuten, wobei das Mischungsverhältnis der Komponenten der Formeln I und II 500 : 1 bis 1 : 100 beträgt, deren Verwendung zur Bekämpfung von Insekten und Milben sowie Verfahren zu deren Anwendung.

EP 0 064 670 A1

Schädlingsbekämpfungsmittel

Gegenstand der Erfindung sind Schädlingsbekämpfungsmittel, insbesondere insektizide und akarizide Mittel, die gekennzeichnet sind durch einen Gehalt an einer Verbindung der Formel I,

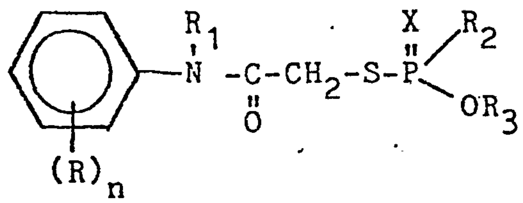

(I)

worin

R gleiche oder verschiedene Reste aus der Gruppe Halogen, $(C_1-C_3)$-Alkyl, $NO_2$, $OCH_3$,

$R_1$, $R_2$ und $R_3$ $(C_1-C_3)$-Alkyl,

X O, S und

n eine ganze Zahl von 1 - 3

bedeuten,

in Kombination mit einer Verbindung der Formel II,

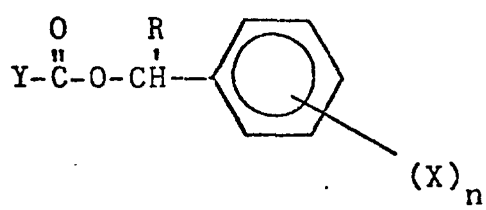

(II)

worin

Y eine gegebenenfalls substituierte Aralkyl-, Cyclopropyl- oder Arylamino-Gruppe,

R Wasserstoff, Cyano oder Ethinyl.

X Halogen oder Aryloxy, das gegebenenfalls durch Halogen substituiert ist, und

n eine ganze Zahl von 1 - 5

bedeuten.

Die Verbindungen der Formel II können sowohl als optische als auch als geometrische Isomere vorliegen. Die Formel II schließt sowohl einzelne Isomere als auch Mischungen dieser Isomeren ein.

Bevorzugte Reste in Formel I sind z.B.

R = Cl oder $(C_1-C_3)$-Alkyl,
$R_1$ = Isopropyl,
$R_2$, $R_3$ = Methyl oder Ethyl,
X = S und
n = 1 oder 2.

Bevorzugte Verbindungen der Formel I sind z.B.

Ia: S[N(2-methyl-phenyl)-N-isopropyl-carbamoylmethyl]-O-äthyl-methyldithiophosphonat,
Ib: S[N(2,5-Dichlorphenyl)-N-isopropyl-carbamoylmethyl]-O-äthyl-methyldithiophosphonat,
Ic: S[N(4-Chlor-phenyl)-N-isopropyl-carbamoylmethyl]-O-äthyl-methyldithiophosphonat,
Id: S[N(3-Methyl-phenyl)-N-isopropyl-carbamoylmethyl]-O-äthyl-methyldithiophosphonat,
Ie: Methandithiophosphonsäure-S[N-(4-methyl-phenyl)-N-isopropylcarbamoylmethyl]-O-äthylester,
If: S[N-Isopropyl-N(2-isopropyl-phenyl)-carbamoylmethyl]-O-methyl-methyldithiophosphonat.

Bevorzugte Reste in Formel II sind z.B.

Y = 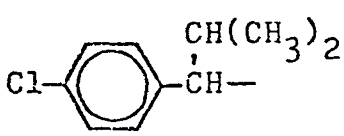 oder

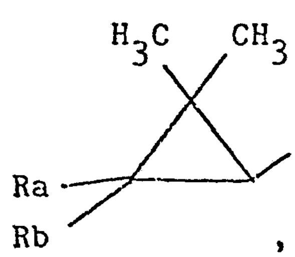 , wobei für Ra und Rb Methyl, oder für

Ra Wasserstoff und für Rb Dichlorvinyl, Dibromvinyl, Tetrachlorethyl, Tetrabromethyl, Dichlordibromethyl stehen.

X = 3-Phenoxy.
n = 1 und
R = Cyano oder Wasserstoff.

Bevorzugte Verbindungen der Formel II sind z.B.

IIa: 3-Phenoxybenzyl-3(2.2-dichlorvinyl)-2,2-dimethyl-cyclopropancarboxylat,
IIb· α-Cyano-3-(phenoxybenzyl-3(2.2-dichlorvinyl)-2,2-dimethyl-cyclopropancarboxylat.
IIc· (S)-α-Cyano-3-phenoxybenzyl(1R)-cis-3(2,2-dibromvinyl)-2,2-dimethyl-cyclopropancarboxylat,
IId (S)-α-Cyano-3-phenoxybenzyl(1R)-cis-3(tetrabromethyl)-2 2-dimethyl-cyclopropancarboxylat,
IIe· (S)-α-Cyano-3-phenoxybenzyl(1R)-cis-3(2'.2'-dichlor-1'.2'-dibrom-ethyl)-2.2-dimethyl-cyclopropancarboxylat.
IIf: α-Cyano-3-phenoxybenzyl-/2-(4-chlorphenyl)-3-methylbuttersäure7-ester.

N-Alkyl-N-aryl-carbamoylmethyl-thiophosphonsäureester bzw. -dithiophosphonsäureester der Formel I. ihre Herstellung und ihre pestizide Wirksamkeit sind z.B. in der DE-OS 26 17 736 beschrieben. Die Verbindungen besitzen eine gute Wirkung gegen Schädlinge der Ordnung Acarina. Ihre Wirkung gegen einige Insektenarten ist jedoch. insbesondere bei niedrigen Aufwandmengen, unbefriedigend.

Die unter dem Namen Pyrethroide bekannte insektizide Verbindungsklasse der Formel II ist z.B. in Chem.Soc.Rev. 4 (1978) 473-505 beschrieben. Die Verbindungen besitzen zwar eine ausgezeichnete Wirksamkeit gegenüber verschiedenen Insektenarten, ihre Wirkung gegen Spinnmilben ist jedoch in vielen Fällen unbefriedigend.

Der vorliegenden Erfindung lag somit u.a. die Aufgabe zugrunde, ein Mittel zu finden, welches sowohl gegen Insekten als auch gegen Milben pestizid wirksam ist.

Es wurde nun überraschenderweise gefunden, daß bei der kombinierten Anwendung von Verbindungen der Formel I mit Verbindungen der Formel II eine synergistische Wirkung bei der Bekämpfung von Insekten und Milben auftritt.

Das Mischungsverhältnis der Komponenten aus Formel I und Formel II kann innerhalb weiter Grenzen variiert werden und kann zwischen 500:1 bis 1:100 liegen. Vorzugsweise liegt es zwischen 200:1 bis 1:50, insbesondere zwischen 125:1 bis 1:31.

Die erfindungsgemäßen Kombinationen zeigen ausgezeichnete synergistische Wirkungen gegenüber einem breiten Schädlingsspektrum, wie z.B. verschiedene Spinnmilbenarten, beispielsweise die Obstbaumspinnmilbe (Panonychus ulmi), die Citrusspinnmilbe (Panonychus citri) und die Bohnenspinnmilbe (Tetranychus urticae). Schädliche Insekten mit saugenden und beißenden Mundwerkzeugen, beispielsweise Käfer, wie z.B. der Mexikanische Bohnenkäfer (Epilachna varivestis), Kartoffelkäfer (Leptinotarsa decemlineata), Erdfloh-Käfer (Phyllotreta spp.), Erdbeerstengelstecher (Coenorrhinus germanicus), Erdbeerblütenstecher (Anthonomus rubi), Baumwollkapselkäfer (Anthonomus grandis), Drahtwürmer (Agriotes spec.). Außerdem Fliegen, wie z.B. die Rübenfliege (Pegomya betae), Mittelmeerfruchtfliege (Ceratitis capitata) und Schaben, wie z.B. die Deutsche Schabe (Blatta germanica) und die orientalische Schabe (Blatta orientalis) sowie Blattläuse, wie z.B. die Schwarze Bohnenlaus (Doralis fabae), Grüne Pfirsichblattlaus (Myzus persicae) und Baumwollwanzen (Oncopeltus fasciatus und Dysdercus spp.). Die Wirksamkeit erstreckt sich auf alle wie auch auf einzelne Entwicklungsstadien sowohl von normal sensiblen als auch von resistenten Arten der genannten Schädlinge.

Die erfindungsgemäßen Kombinationen zeichnen sich andererseits durch eine gute Verträglichkeit gegenüber einer Vielzahl von Kulturpflanzen aus.

Die erfindungsgemäßen Wirkstoffmischungen können in Form üblicher Zubereitungen wie Emulsionskonzentraten, ULV-Lösungen, Dispersionen, Spritzpulvern, Stäuben oder Granulaten formuliert werden. Der Gesamtwirkstoffgehalt der marktfähigen Formulierungen beträgt im allgemeinen etwa 0,1 bis 95 Gew.-%, vorzugsweise 10 bis 80 Gew.-%. Daneben enthalten sie die üblichen Haft-, Emulgier-, Netz-, Dispergier-, Füll-, Trägerstoffe und Lösungsmittel.

Die erfindungsgemäßen Kombinationen können als Tankmischungen, bei denen die einzeln formulierten Wirkstoffe erst unmittelbar vor der Applikation vermischt werden, oder als Fertigformulierungen zur Anwendung gebracht werden.

Fertigmischungen in Form von Spritzpulvern (benetzbare Pulver), emulgierbaren Konzentraten, Dispersionen, Stäubemitteln, Granulaten oder versprühbaren Lösungen enthalten die üblichen Formulierungshilfsstoffe wie Netz-, Emulgier-, Haft-, Dispergiermittel, feste oder flüssige Inertstoffe, Trägerstoffe, Mahlhilfsmittel und Lösungsmittel.

Spritzpulver sind in Wasser gleichmäßig dispergierbare Präparate, die neben dem Wirkstoff außer einem Verdünnungs-, Träger- oder Inertstoff noch Netzmittel, z.B. polyoxethylierte Alkylphenole, polyoxethylierte Fettalkohole, Alkyl- oder Alkylphenyl-sulfonate, und Dispergiermittel, z.B. ligninsulfonsaures Calcium, 2,2'-dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden beispielsweise durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calziumsalze wie Ca-dodecylbenzolsulfonat, nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxethylen-sorbitan-fettsäureester, Polyoxethylensorbitester, Alkylaryl-Propylenoxid-Ethylenoxid-Kondensationsprodukte u.a.

Stäubemittel erhält man z.B. durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können z.B. entweder durch Verdüsen einer Lösung des Wirkstoffes auf adsorptionsfähiges, granuliertes Inertmaterial hergestellt werden, oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - granuliert werden.

Bei pestiziden Mitteln können die Konzentrationen der Wirkstoffe in den handelsüblichen Formulierungen verschieden sein.

In Spritzpulvern kann z.B. die Gesamt-Wirkstoffkonzentration im Bereich von etwa 10 bis 80 Gew.-% variieren, der Rest zu

100 Gew.-% besteht aus den oben angegebenen Formulierungszusätzen. Bei emulgierbaren Konzentraten kann die Wirkstoffkonzentration gleichfalls etwa 10 bis 80 Gew.-% betragen. Staubförmige Formulierungen enthalten meistens 5 - 20 Gew.-% an Wirkstoff, versprühbare Lösungen etwa 2 - 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden. Er beträgt im allgemeinen etwa 0,5 bis 30 Gew.-%.

Zur Anwendung werden die handelsüblichen Konzentrate gegebenenfalls in üblicher Weise verdünnt, z.B. bei benetzbaren Pulvern und emulgierbaren Konzentraten mittels Wasser. Staubförmige und granulierte Zubereitungen sowie versprühbare Lösungen werden vor der Anwendung im allgemeinen nicht mehr mit weiteren inerten Stoffen verdünnt. Die Anwendungskonzentrationen an erfindungsgemäßen Wirkstoffkombinationen in den Spritzbrühen variieren wie üblich mit den äußeren Bedingungen, wie z.B. Anwendungsart, den Klimabedingungen, insbesondere Temperatur und Feuchtigkeit, sowie gegebenenfalls der Kulturpflanzen-Art bzw. Größe. Sie können innerhalb weiter Grenzen schwanken und betragen in den Spritzbrühen etwa 0,005 bis 0,1 Gew.-%, vorzugsweise 0,005 bis 0,05 Gew.-% Wirkstoffkombination. Es sind auch höhere Wirkstoffkonzentrationen möglich, wobei aber gegebenenfalls nur geringe technische oder wirtschaftliche Vorteile erwartet werden können.

Bei der Anwendung z.B. auf landwirtschaftlichen Bodenflächen beträgt die Aufwandmenge an erfingungsgemäßer Wirkstoffkombination etwa 0,3 bis 31 kg/ha, vorzugsweise 1 bis 11 kg/ha.

Die erfindungsgemäßen Wirkstoffkombinationen können auch zusammen mit anderen Schädlingsbekämpfungsmitteln, wie z.B. Insektiziden, Fungiziden oder Herbiziden ausgebracht werden, und zwar sowohl im Gemisch als auch nacheinander. Auch die kombinierte Ausbringung mit Düngemitteln ist möglich.

Die Erfindung wird durch die nachfolgenden Beispiele näher erläutert, ohne sich jedoch auf diese zu beschränken.

A. FORMULIERUNGSBEISPIELE

Beispiel 1

Ein emulgierbares Konzentrat wird erhalten aus

15 Gew.-Teilen Wirkstoffgemisch aus Verbindungen der Formeln I und II
75 Gew.-Teilen Cyclohexanon
und 10 Gew.-Teilen oxethyliertes Nonylphenol (10 AeO)+

+) Anzahl AeO = Anzahl Ethylenoxideinheiten im Polyglykoletherrest

Beispiel 2

Ein in Wasser leicht dispergierbares benetzbares Pulver wird erhalten, indem man

25 Gew.-Teile Wirkstoffgemisch+) aus Verbindungen der Formeln I und II
64 Gew.-Teile kaolinhaltigen Quarz
10 Gew.-Teile ligninsulfonsaures Calcium
und 1 Gew.-Teil oleoylmethyltaurinsaures Natrium

mischt und in einer Stiftmühle mahlt.

+) Die Einzelwirkstoffe aus den Verbindungen der Formeln I und II können auch getrennt formuliert und anschließend vermischt oder zusammen vermahlen werden.

Beispiel 3

Ein Stäubemittel wird erhalten, indem man

10 Gew.-Teile Wirkstoffgemisch+) aus Verbindungen der Formeln I und II
und 90 Gew.-Teile Talkum

mischt und in einer Schlagmühle zerkleinert.

Beispiel 4

Ein Granulat wird erhalten durch Granulieren einer Mischung aus

2 - 15 Gew.-Teilen Wirkstoffgemisch+) aus Verbindungen der Formeln I und II
und 98 - 85 Gew.-Teilen inerten Granulatmaterialien, wie Attapulgit, Bimsstein, Quarzsand.

+) Die Einzelwirkstoffe aus den Verbindungen der Formeln I und II können auch getrennt formuliert und anschließend vermischt oder zusammen vermahlen werden.

B. BIOLOGISCHE BEISPIELE

Beispiel I

Zur Bestimmung der biologischen Wirksamkeit der Einzelsubstanzen und der Kombinationen werden die an den Schädlingen ermittelten $LC_{50}$-Werte herangezogen. Dabei bedeutet $LC_{50}$ die Konzentration an Wirkstoff bzw. Wirkstoffgemisch in Gew.-% in der Spritzbrühe bzw. Lösung bzw. Applikationszubereitung, die erforderlich ist, um 50 % der Testschädlinge abzutöten (= letale Wirkstoff-Konzentration mit 50 %igem Abtötungseffekt). Die hierzu benötigten Werte werden jeweils aus einem Dosis-Wirkungsdiagramm im Wahrscheinlichkeitsnetz nach der Auftragung der ermittelten Mortalitätswerte und der Konstruktion einer Regressionsgeraden abgelesen. Die Wirksamkeit der Kombination aus 2 Komponenten wird nach der Methode von Yun-Pei Sun und E.R. Johnson, Journ.Econ.Entomol., 1960, Vol. 53, 5; 887 - 892 bestimmt.

Hierzu wird der Koeffizient der Co-Toxizität der Mischung nach folgender Formel berechnet:

$$\text{Koeffizient} = \frac{\text{tatsächl. Tox. index d. Mischung}}{\text{theoret. Tox. index d. Mischung}} \times 100$$

Ein Koeffizient der Cotoxizität der Mischung nahe dem Wert 100 zeigt eine additive Wirkung beider Substanzen an; ein Koeffizient kleiner als 100 zeigt Antagonismus, ein Koeffizient größer als 100 Synergismus an.

Mit Bohnenspinnmilben (Tetranychus urticae) stark befallene Bohnenpflanzen werden mit wäßrigen Verdünnungen von Emulsionskonzentraten der in Tabelle I angegebenen Einzelwirkstoffe bzw. Wirkstoffkombinationen (WS) in Verdünnungsreihen bis zum Stadium des beginnenden Abtropfens behandelt und nach dem Antrocknen des Spritzbelages im Gewächshaus bei 20 ± 3°C aufgestellt. Die Bestimmung der Mortalität der Bohnenspinnmilben erfolgt 8 Tage nach der Behandlung. Aus den erhaltenen Werten werden jeweils die $LC_{50}$-Werte (= % WS in der Spritzbrühe) ermittelt und der Koeffizient der Cotoxizität für die Mischungen nach Yun-Pei Sun et al. errechnet. Die Ergebnisse sind in der nachstehenden Tabelle I zusammengefaßt wiedergegeben.

Tabelle I:

| Wirkstoffe+) | $LC_{50}$ (Gew.-% WS) | Koeffizient der Cotoxizität |
|---|---|---|
| Verbindung Ic | 0,00044 | |
| Verbindung If | 0,00065 | |
| Verbindung IIc | 0,0095 | |
| Verbindungen Ic + IIc Gew.-Verh. 1:1 | 0,0003 | 269 |
| Verbindungen Ic + IIc Gew.-Verh. 1:31 | 0,005 | 207 |
| Verbindungen If + IIc Gew.-Verh. 1:1 | 0,0007 | 176 |
| Verbindungen If + IIc Gew.-Verh. 1:31 | 0,004 | 167 |

+) Verbindung Ic: S/N̄(4-Chlor-phenyl)-N-isopropyl-carbamoylmethyl7-O-äthyl-methyldithiophosphonat,

Verbindung If: S/N̄-Isopropyl-N(2-isopropyl-phenyl)-carbamoylmethyl7-O-methyl-methyldithiophosphonat,

Verbindung IIc: (S)-α-Cyano-3-phenoxybenzyl(1R)-cis-3-(2,2-dibromvinyl)-2,2-dimethyl-cyclopropancarboxylat.

Wie aus der letzten Spalte in Tabelle I ersichtlich, liegen die Koeffizienten der Cotoxizität bei den Mischungen deutlich über 100, d.h., es liegt ein Synergismus vor.

## Beispiel II

Mit Kundebohnenblattläusen (Aphis craccivora) stark besetzte Ackerbohnen (Vicia faba) werden mit wäßrigen Suspensionen von Spritzpulvern der in Tabelle II angegebenen Einzelwirkstoffe bzw. Wirkstoffkombinationen (WS) in Verdünnungsreihen bis zum Stadium des beginnenden Abtropfens behandelt und nach dem Antrocknen des Spritzbelages im Gewächshaus bei 20 ± 3°C aufgestellt. Die Bestimmung der Mortaliät der Kundebohnenblattläuse erfolgt 3 Tage nach der Behandlung. Die Ermittlung der $LC_{50}$-Werte (= % WS in der Spritzbrühe) und der Koeffizienten der Cotoxizität für die Mischungen erfolgt analog Beispiel I. Die Ergebnisse sind in der nachstehenden Tabelle II zusammengefaßt wiedergegeben.

Tabelle II:

| Wirkstoffe+) | $LC_{50}$ (Gew.-% WS) | Koeffizient der Cotoxizität |
|---|---|---|
| Verbindung If | 0,0016 | |
| Verbindung IIc | 0,000005 | |
| Verbindung IId | 0,0000075 | |
| Verbindungen If + IIc Gew.-Verh. 63:1 | 0,00024 | 338 |
| Verbindungen If + IId Gew.-Verh. 16:1 | 0,00009 | 135 |

+) Verbindungen If und IIc vgl. Tabelle I;

Verbindung IId: (S)-α-Cyano-3-phenoxybenzyl(1R)-cis-3-(tetrabromethyl)-2,2-dimethyl-cyclopropancarboxylat.

0064670

Wie aus der letzten Spalte in Tabelle II ersichtlich, liegen die Koeffizienten der Cotoxizität bei den Mischungen deutlich über 100, d.h., es liegt ein Synergismus vor.

Beispiel III

Auf die Innenseiten des Deckels und des Bodens von Petrischalen werden mittels Pipette jeweils 1 ml acetonische Lösungen der in Tabelle III angegebenen Einzelwirkstoffe bzw. Wirkstoffkombinationen (WS) in Verdünnungsreihen aufgetragen und die Deckel bzw. Schalen bis zur vollständigen Verdunstung des Acetons offen an der Luft stehen gelassen. Danach werden je 10 Stubenfliegen (Musca domestica) in die Schalen gesetzt und letztere mit dem Deckel verschlossen. Nach 3 Stunden erfolgt die Bestimmung der Mortalität der Stubenfliegen. Die Ermittlung der $LC_{50}$-Werte (= % WS in der acetonischen Lösung) und der Koeffizienten der Cotoxizität für die Mischungen erfolgt analog Beispiel I. Die Ergebnisse sind in der nachstehenden Tabelle III zusammengefaßt wiedergegeben.

Tabelle III:

| Wirkstoffe+) | $LC_{50}$ (Gew.-% WS) | Koeffizient der Cotoxizität |
|---|---|---|
| Verbindung If | 0,015 | |
| Verbindung IIc | 0,00001 | |
| Verbindung IId | 0,0013 | |
| Verbindungen If + IIc Gew.-Verh. 125:1 | 0,0005 | 229 |
| Verbindungen If + IId Gew.-Verh. 3,2:1 | 0,0033 | 150 |

+) vgl. Tabellen I und II.

Wie aus der letzten Spalte in Tabelle III ersehen werden kann, liegen die Koeffizienten der Cotoxizität bei den Mischungen deutlich über 100, d.h., es liegt ein Synergismus vor.

Beispiel IV

Analog dem Beispiel III werden die in der Tabelle IV genannten Wirkstoffe bzw. Wirkstoffkombinationen (WS) als acetonische Lösungen in Verdünnungsreihen auf die Innenseite des Deckels und Bodens von Petrischalen aufgetragen und abtrocknen lassen. Danach werden in jede Schale 10 Larven (L4) der Deutschen Schabe (Blatella germanica) gesetzt, die Schalen mit den zugehörigen Deckeln verschlossen und nach 72 Stunden der Grad der Abtötung in % ermittelt. Die Bestimmung der $LC_{50}$-Werte (= % WS in der acetonischen Lösung) und des Cotoxizitäts-Koeffizienten für die Mischung erfolgt analog Beispiel I. Die Ergebnisse sind in der nachstehenden Tabelle IV zusammengefaßt wiedergegeben.

Tabelle IV:

| Wirkstoffe+) | $LC_{50}$ (Gew.-% WS) | Koeffizient der Cotoxizität |
|---|---|---|
| Verbindung If | 0,013 | |
| Verbindung IIc | 0,000042 | |
| Verbindungen If + IIc Gew.-Verh. 32:1 | 0,00095 | 131 |

+) vgl. Tabelle I.

Wie aus der letzten Spalte in Tabelle IV ersichtlich, liegt der ermittelte Koeffizient der Cotoxizität bei der Mischung deutlich über 100, d.h., es liegt ein Synergismus vor.

Beispiel V

Es werden mittels Pipette jeweils 1 ml acetonische Lösungen der in Tabelle V angegebenen Einzelwirkstoffe bzw. Wirkstoffkombinationen (WS) in Verdünnungsreihen auf Filterpapierscheiben geträufelt, letztere jeweils auf die Innenseite des Bodens von Petrischalen gelegt und das Aceton verdunsten lassen. Danach werden in jeder Schale 10 Larven (L3) des Mehlkäfers (Tenebrio molitor) auf das Filterpapier gesetzt und die Schalen mit den Deckeln verschlossen. Die Bestimmung des Grades der Abtötung in % erfolgt nach 48 Stunden. Die Ermittlung der $LC_{50}$-Werte (= % WS in der acetonischen Lösung) und des Cotoxizitäts-Koeffizienten für die Mischung erfolgt analog Beispiel I. Die Ergebnisse sind in der nachstehenden Tabelle V zusammengefaßt wiedergegeben.

Tabelle V:

| Wirkstoffe+) | $LC_{50}$ (Gew.-% WS) | Koeffizient der Cotoxizität |
|---|---|---|
| Verbindung If | 0,0044 | |
| Verbindung IIc | 0,001 | |
| Verbindungen If + IIc Gew.-Verh. 2:1 | 0,00085 | 253 |

+) vgl. Tabelle I.

Wie aus der letzten Spalte in Tabelle V ersichtlich, liegt der ermittelte Koeffizient der Cotoxizität bei der Mischung deutlich über 100, d.h., es liegt ein Synergismus vor.

## Beispiel VI

Es werden die in der Tabelle VI angegebenen Einzelwirkstoffe bzw. Wirkstoffkombinationen (WS) in Verdünnungsreihen analog Beispiel V in Petrischalen auf Filterpapierscheiben gebracht und das Aceton verdunsten lassen. Danach werden in jeder Schale 10 Imagines des Gemeinen Kornkäfers (Sitophilus granarius) auf das Filterpapier gesetzt und die Schalen mit den entsprechenden Deckeln verschlossen. Die Bestimmung des Grades der Abtötung in % erfolgt nach 48 Stunden. Die Ermittlung der $LC_{50}$-Werte (= % WS in der acetonischen Lösung) und des Cotoxizitäts-Koeffizienten für die Mischungen erfolgt analog Beispiel I Die Ergebnisse sind in der nachstehenden Tabelle VI zusammengefaßt wiedergegeben.

Tabelle VI:

| Wirkstoffe+) | $LC_{50}$ (Gew.-% WS) | Koeffizient der Cotoxizität |
|---|---|---|
| Verbindung If | 0,0225 | |
| Verbindung IIc | 0,00038 | |
| Verbindung IId | 0,00042 | |
| Verbindungen If + IIc Gew.-Verh. 31:1 | 0,004 | 201 |
| Verbindungen If + IId Gew.-Verh. 16:1 | 0,0046 | 118 |

+) vgl. Tabelle II.

Wie aus der letzten Spalte in Tabelle VI ersichtlich, liegen die ermittelten Koeffizienten der Cotoxizität bei den Mischungen deutlich über 100, d.h., es liegt ein Synergismus vor.

Patentansprüche:

1. Schädlingsbekämpfungsmittel, gekennzeichnet durch einen Gehalt an einer Verbindung der Formel I,

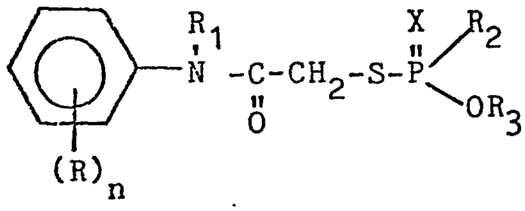

(I)

worin

R gleiche oder verschiedene Reste aus der Gruppe Halogen, $(C_1-C_3)$-Alkyl, $NO_2$, $OCH_3$,

$R_1$, $R_2$ und $R_3$ $(C_1-C_3)$-Alkyl,

X O, S und

n eine ganze Zahl von 1 - 3

bedeuten,

in Kombination mit einer Verbindung der Formel II,

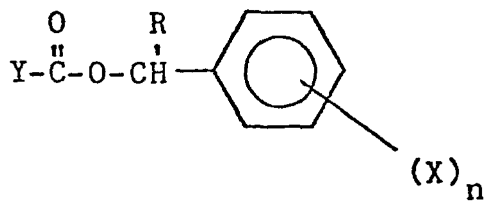

(II)

worin

Y eine gegebenenfalls substituierte Aralkyl-, Cyclopropyl- oder Arylamino-Gruppe,

R Wasserstoff, Cyano oder Ethinyl,

X Halogen oder Aryloxy, das gegebenenfalls durch Halogen substituiert ist, und

n eine ganze Zahl von 1 - 5,

deren optische oder geometrische Isomeren oder deren Gemische bedeuten.

2. Schädlingsbekämpfungsmittel gemäß Anspruch 1, dadurch gekennzeichnet, daß das Mischungsverhältnis der Komponenten der Formeln I und II 500:1 bis 1:100, vorzugsweise 200:1 bis 1:50, beträgt.

3. Schädlingsbekämpfungsmittel nach Ansprüchen 1 oder 2, dadurch gekennzeichnet, daß in Formel I

R = Cl oder $(C_1-C_3)$-Alkyl,
$R_1$ = Isopropyl,
$R_2$, $R_3$ = Methyl oder Ethyl,
X = S und
n = 1 oder 2,

und in Formel II

Y = 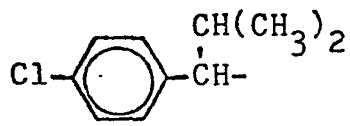 oder

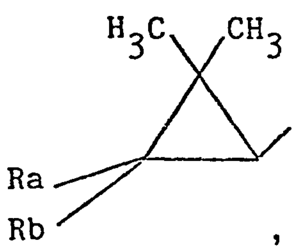

, wobei für Ra und Rb Methyl, oder für Ra Wasserstoff und für Rb Dichlorvinyl, Dibromvinyl, Tetrachlorethyl, Tetrabromethyl, Dichlordibromethyl stehen,

X = 3-Phenoxy,
n = 1 und
R = Cyano oder Wasserstoff
bedeuten.

4. Schädlingsbekämpfungsmittel, gekennzeichnet durch einen Gehalt von 0,1 bis 95 Gew.-% an einer Wirkstoffkombination aus Verbindungen der Formeln I und II gemäß Ansprüchen 1 bis 3 sowie üblichen Formulierungshilfsmitteln.

5. Verwendung der Mittel gemäß Ansprüchen 1 bis 4 zur Bekämpfung von Insekten und Milben.

6. Verfahren zur Bekämpfung von Schadinsekten und Milben, dadurch gekennzeichnet, daß man diese oder deren Lebensraum mit insektizid und akarizid wirksamen Mengen einer Wirkstoffkombination gemäß Ansprüchen 1 bis 4 behandelt.

7. Verfahren nach Anspruch 6, dadurch gekennzeichnet, daß man die Behandlung mit einer Applikationskonzentration von 0,005 bis 0,1 Gew.-% bzw. einer Applikationsmenge von 0,3 bis 31 kg/ha an Wirkstoffkombination durchführt.

Europäisches Patentamt

**EUROPÄISCHER RECHERCHENBERICHT**

0064670
Nummer der Anmeldung

EP 82 10 3619

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | US-A-4 152 428 (G. SALBECK et al.) & DE - A - 2 617 736 (Cat. D) & FR - A - 2 361 067 --- | 1-7 | A 01 N 57/22 // (A 01 N 57/22 A 01 N 53/00 A 01 N 37/38 ) |
| A | RESEARCH DISCLOSURE, Nr. 161, September 1977, Seiten 99-100, Nr. 16179, Homewell, Havant, Hampshire, G.B. "Pesticide mixture for use in agricultural and animal health outlets" ----- | 1-7 | |
| | | | RECHERCHIERTE SACHGEBIETE (Int. Cl. 3) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 19-08-1982 | DECORTE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82